# EUROPEAN PATENT APPLICATION

(11) **EP 4 810 883 A1**
(43) Date of publication of application: **23.09.2026**
(21) Application number: 24917258.6
(22) Date of filing: 13.12.2024
(51) Int. Cl.: F25D 29/00, F25D 23/00, G06T 5/00, G06V 20/68, G06V 40/20, G06V 40/18, G06F 3/048, G06N 3/08

(54) **REFRIGERATOR AND CONTROL METHOD THEREFOR**

(30) Priority: 08.01.2024 KR 20240002929
(71) Applicant: Samsung Electronics Co., Ltd., Suwon-si, Gyeonggi-do 16677 (KR)
(72) Inventor: KIM, Minsoo, Suwon-si Gyeonggi-do 16677 (KR); AGARWAL, Harsh, Suwon-si Gyeonggi-do 16677 (KR); HWANG, Seungjun, Suwon-si Gyeonggi-do 16677 (KR)
(74) Representative: Gulde & Partner
(86) International application number: PCT/KR2024/096994
(87) International publication number: WO 2025/150769

(57) **Abstract**

Provided are a refrigerator and a control method therefor. The refrigerator comprises: a display; a main body including a storage chamber; a door that includes a door bin and is rotatably connected to the main body to open and close the storage chamber; a camera that is located in the main body and captures images of the inside of the main body and the inside of the door; a memory that stores at least one instruction; and a processor which obtains images by imaging at least a portion of the inside of the main body and the door by means of the camera when a trigger signal is detected, detects a food object included in the obtained images, identifies a stocking region of the food object on the basis of the images when it is determined that the food object is being stocked, obtains a cropped image by cropping a region corresponding to the food object in the images, obtains a food image corresponding to the food object on the basis of information about the stocking region of the food object and the cropped image, and adds the obtained food image onto a food UI that visualizes the inside of the refrigerator on the basis of the stocking region of the food object.

## Description

### [TECHNICAL FIELD]

This disclosure relates to a refrigerator and a control method therefor, and particularly, to a refrigerator photographing the inside of the refrigerator and providing a food UI visualizing the inside of the refrigerator and a control method therefor.

### [BACKGROUND ART]

Typically, refrigerators are home appliances that are provided with a storage chamber storing foods, and a cold air supply apparatus supplying cold air to the storage chamber, to keep foods fresh for a long period of time.

In particular, as for the latest refrigerators, a camera is provided at a main body including a storage chamber to photograph the inside of the main body. Additionally, the refrigerators obtain information on foods currently stored in the refrigerator, and provide the obtained information on foods to users based on photographed images.

Meanwhile, a conventional technology for identifying foods only at a limited location or identifying the locations of foods by using a plurality of cameras or a plurality of images has been provided. However, in the case of a conventional technology for identifying the location of a food based on a photographed image, information on a food and the location of a food may not be identified accurately when a plurality of foods overlaps with one another. Additionally, in the case of a technology for photographing the space in the main body of a refrigerator with a small number of cameras, there may be spaces in the main body of the refrigerator, which are not photographed due to a limited number and limited locations of cameras as well as structural limitations. Further, in the case where a food is hidden by other foods or located at a blind spot, it may be impossible to identify or determine the food, despite a combination of information on the inside of the main body of the refrigerator with a plurality of cameras or images.

### [DISCLOSURE OF INVENTION]

### [SOLUTION TO PROBLEM]

According to one embodiment, a refrigerator includes a display, a main body including a storage chamber, a door rotatably coupled to the main body to open and close the storage chamber and configured to include a door bin, a camera located at the main body and configured to photograph an inside of the main body and an inside of the door, memory configured to store at least one instruction, and a processor, the processor configured to photograph, based on a trigger signal being sensed, at least part of the inside of the main body and the door and obtain an image through the camera, detect a food object included in the obtained image, identify, based on the food object being identified as stocked, a stocking region of the food object according to the image, crop a region corresponding to the food object in the image and obtain a cropped image, obtain, based on information on the stocking region of the food object and the cropped image, a food image corresponding to the food object, and add, based on the stocking region of the food object, the obtained food image on a food UI visualizing an inside of the refrigerator.

The main body and the door may be divided into a plurality of regions, the stocking region of the food object may correspond to one among the plurality of regions, and the processor may add the food image onto a stocking region of the food object among a plurality of regions included in the food UI.

The processor may identify, based on information on a user's arm angle, a user's arm motion, a user's gaze and a motion vector obtained from the image, a left-right movement direction of the first food object, identify, based on size information of a first food object obtained from the image, an upward-downward movement direction of the food object, and identify, based on the left-right movement direction and the upward-downward movement direction of the first food object, the stocking region of the food object.

The processor may mask a region excluding an existing food image located in the stocking region of the food object among a plurality of regions included in the food UI, input an image of the masked stocking region and the cropped image to a trained neural network model and obtain a food image corresponding to the food object, and dispose the food image corresponding to the food object on the image of the masked stocking region not to overlap with the existing food image.

The processor may crop, based on the food object being hidden by a user's hand object or another food object, the food object hidden by the hand object and obtain a cropped image, input the obtained cropped image to a trained neural network model and obtain a restored image in which a portion hidden by the hand object is restored, and obtain, based on information on a stocking region of the first food object and the restored image, a food image corresponding to the first food object.

The processor may crop, based on the food object being present in a plurality of numbers, each of the plurality of food objects and obtain a plurality of cropped images, and input each of the plurality of cropped images to a trained neural network model and obtain a plurality of restored images in which a portion hidden by a hand object is restored.

The processor may input the plurality of restored images to a trained neural network model and identify a type of a food included in the plurality of restored images.

The processor may generate a first layer corresponding to the food image, and control the display to display the first layer and at least one second layer corresponding to a previously-stocked food image on the stocking region of the food object in an overlapped manner, in the food UI.

The processor may control, based on a user touch, the display to display the first layer and the at least one second layer in a way that a display order of the first layer and the at least one second layer is changed.

Food density displayed on a plurality of regions included in the food UI may be adjustable based on user settings.

Meanwhile, according to one embodiment, a control method for a refrigerator including a main body including a storage chamber, a door rotatably coupled to the main body to open and close the storage chamber and configured to include a door bin, a camera located at the main body and configured to photograph an inside of the main body and an inside of the door includes photographing, based on a trigger signal being sensed, at least part of an inside of the main body and the door and obtaining an image through the camera, detecting a food object included in the obtained image, identifying, based on the food object being identified as stocked, a stocking region of the food object according to the image, cropping a region corresponding to the food object in the image and obtaining a cropped image, obtaining, based on information on the stocking region of the food object and the cropped image, a food image corresponding to the food object, and adding, based on the stocking region of the food object, the obtained food image on a food UI visualizing an inside of the refrigerator.

The main body and the door may be divided into a plurality of regions, the stocking region of the food object may correspond to one among the plurality of regions, and the adding may include adding the food image onto a stocking region of the food object among a plurality of regions included in the food UI.

The identifying may include identifying, based on information on a user's arm angle, a user's arm motion, a user's gaze and a motion vector obtained from the image, a left-right movement direction of a first food object, identifying, based on size information of the first food object obtained from the image, an upward-downward movement direction of the food object, and identifying, based on the left-right movement direction and the upward-downward movement direction of the first food object, the stocking region of the food object.

The obtaining a food image may include masking a region excluding an existing food image located in the stocking region of the food object among a plurality of regions included in the food UI, and inputting an image of the masked stocking region and the cropped image to a trained neural network model and obtaining a food image corresponding to the food object, and the adding may include disposing the food image corresponding to the food object on the image of the masked stocking region not to overlap with the existing food image.

The obtaining a cropped image may include cropping, based on the food object being hidden by a user's hand object or another food object, the food object hidden by the hand object and obtaining a cropped image, and inputting the obtained cropped image to a trained neural network model and obtaining a restored image in which a portion hidden by the hand object is restored, and the obtaining a food image may include obtaining, based on information on a stocking region of the first food object and the restored image, a food image corresponding to the first food object.

The obtaining a cropped image may include cropping, based on the food object being present in a plurality of numbers, each of the plurality of food objects and obtaining a plurality of cropped images, and inputting each of the plurality of cropped images to a trained neural network model and obtaining a plurality of restored images in which a portion hidden by a hand object is restored.

The method may include inputting the plurality of restored images to a trained neural network model and identifying a type of a food included in the plurality of restored images.

The method may include generating a first layer corresponding to the food image, and displaying the first layer and at least one second layer corresponding to a previously-stocked food image on the stocking region of the food object in an overlapped manner, in the food UI.

The displaying may include displaying, based on a user touch, the first layer and the at least one second layer in a way that a display order of the first layer and the at least one second layer is changed.

Food density displayed on a plurality of regions included in the food UI may be adjustable based on user settings.

### [BRIEF DESCRIPTION OF DRAWINGS]

FIG. 1 is a block diagram illustrating a configuration of a refrigerator, according to one embodiment;
FIGS. 2A-2F are views provided to explain interior and exterior configurations of a refrigerator, according to one embodiment;
FIG. 3 is a flowchart provided to explain a method for managing stock and removal of a food, according to one embodiment;
FIGS. 4A-4C are views provided to explain a method for restoring a food object, according to various embodiments;
FIG. 5 is a flowchart provided to explain a method for adding an input food on a food UI, according to one embodiment;
FIG. 6 is a flowchart provided to explain a method for identifying a stocking region of a food object, according to one embodiment;
FIG. 7 is a view illustrating a food UI divided into a plurality of regions, according to one embodiment;
FIGS. 8-10 are views provided to explain a method for identifying a stocking region of a food object, according to one embodiment;
FIG. 11 is a flowchart provided to explain a method for generating a food image corresponding to a food object and adding the image onto a food UI, according to one embodiment;
FIGS. 12A-12F are views provided to explain a method for generating a food image corresponding to a food object and adding the image onto a food UI, according to one embodiment;
FIG. 13 is a view provided to explain a method for providing a food UI through a plurality of layers, according to one embodiment;
FIGS. 14A and 14B are views provided to explain a method for manipulating a food UI based on a user touch input, according to one embodiment;
FIGS. 15A and 15B are views provided to explain a food UI having different food density, according to one embodiment; and
FIG. 16 is a view provided to explain an embodiment where part of a plurality of regions are provided as a food UI, according to one embodiment.

### [MODE FOR INVENTION]

Various embodiments set forth herein and terms used for the embodiments are not intended to limit the technical features of the matter of the disclosure to those of specific embodiments thereof, and it is to be understood that the embodiments set forth herein include various modifications, equivalents or alternatives thereof.

In describing the drawings, like reference numerals may be used to indicate like or relevant elements.

Unless explicitly stated otherwise, a singular form corresponding to an item may include a singular item or plural items.

In the disclosure, phrases such as "A or B," "at least one of A and B," "at least one of A or B," "A, B or C," "at least one of A, B and C," and "at least one of A, B, or C" may respectively include any one or all possible combinations of the items listed together in the phrases.

The term "and/or" means including a combination or any of a plurality of relevant elements described.

In the disclosure, a term such as "1st," "2nd," or "first," or "second" may be used merely to differentiate one element from another but not intended to limit the elements in another aspect (e.g., importance or order).

Additionally, terms set forth herein such as "front surface," "rear surface," "upper surface," "lower surface," "side surface," "left side," "right side," "upper portion," "lower portion" and the like are defined with respect to the drawings, and are not intended to limit the shape and location of each element.

Terms such as "include," or "have" and the like are used to indicate the presence of stated features, numbers, steps, operations, elements, parts or a combination thereof, and do not imply exclusion of the presence or addition of one or more different features, numbers, steps, operations, elements, parts or a combination thereof.

Based on one element being referred to as "connected with/to," "coupled with/to," "supporting," or "contacting" another element, it is to be understood that one element is connected with/to another element, is coupled with/to another element, supports another element, or contacts another element directly and indirectly through a third element.

Based on one element being referred to as located "on" another element, it is to be understood that one element contacts another element and that yet another element is present between the two elements.

A refrigerator according to one embodiment may include a main body.

The "main body" may include an interior shape, an exterior shape disposed outside the interior shape, and a heat insulator provided between the interior shape and the exterior shape.

The "interior shape" may include at least one among a case, a plate, a panel or a liner that forms a storage chamber. The interior shape may be formed of one body or formed in the way that a plurality of plates is assembled. The "exterior shape" may form the exterior of the main body, and be coupled to the outside of the interior shape such that the heat insulator is disposed between the interior shape and the exterior shape.

The "heat insulator" may insulate the inside and the outside of the storage chamber such that a temperature in the storage chamber is maintained at a proper temperature without being affected by an environment outside the storage chamber. According to one embodiment, the heat insulator may include a foamed heat insulator. The foamed heat insulator may be formed by injecting and foaming, between the interior shape and the exterior shape, urethane foam in which polyurethane and a foaming agent are combined.

According to one embodiment, the heat insulator may further include a vacuum insulation panel in addition to the foamed heat insulator, or may be comprised only of a vacuum insulation panel rather than a foamed heat insulator. The vacuum insulation panel may include a core material, and a cover material accommodating the core material and sealing an inside in a vacuum or at a pressure close to a vacuum. However, the heat insulator is not limited to the above-described foamed heat insulator or the vacuum insulation panel, and may include various materials for heat insulation.

The "storage chamber" may include a space limited by the interior shape. The storage chamber may further include an interior shape limiting a space corresponding to the storage chamber. In the storage chamber, various types of items such as foods, medicines, cosmetics and the like may be stored, and at least one side of the storage chamber may be formed to be open to input and output the items.

The refrigerator may include one or more storage chambers. In the case where two or more storage chambers are formed in the refrigerator, each of the storage chambers may have a different use and be maintained at a different temperature. To this end, each of the storage chambers may be partitioned from each other by a partition wall including a heat insulator.

The storage chamber may be provided in the way that a temperature of the storage chamber is maintained in a proper temperature range depending on purpose, and may include a "refrigerator compartment," a "freezer compartment," or a "variable temperature compartment" that are divided depending on its purpose and/or temperature ranges. The temperature of the refrigerator compartment may be maintained to be fit for refrigerating items, while the temperature of the freezer compartment may be maintained to be fit for freezing items. The "refrigerating" process may mean cooling items as long as the items are not frozen, and the temperature of the refrigerator compartment, for example, may be maintained in a range from 0 °C to 7°C. The "freezing" process may mean cooling items to freeze the items or keep the items frozen, and the temperature of the freezer compartment, for example, may be maintained in a range from - 20 °C to - 1 °C. The variable temperature compartment may be used as any one of the refrigerator compartment or the freezer compartment based on a user selection or regardless of a user selection.

The storage chamber may be referred to as various terms such as a "vegetable compartment," a "freshening compartment," a "cooling compartment," an "ice making compartment," and the like as well as a "refrigerator compartment," a "freezer compartment," a "variable temperature compartment," and the like, and terms such as a "refrigerator compartment," a "freezer compartment," a "variable temperature compartment," and the like used hereinafter need to be understood as encompassing storage chambers having a corresponding purpose and a corresponding temperature range respectively.

According to one embodiment, the refrigerator may include at least one door configured to open and close one side of the storage chamber, which is open. Doors may be provided to open and close one or more storage chambers respectively, or one door may be provided to open and close a plurality of storage chambers. The door may be installed on the front of the main body in a rotatable or slidable manner.

The "door" may be configure to seal the storage chamber at a time when the door is closed. The door may include a heat insulator like the main body such that the storage chamber is thermally insulated at a time when the door is closed.

According to one embodiment, the door may include a door external plate forming the front surface of the door, a door internal plate forming the rear surface of the door and facing the storage chamber, an upper cap, a lower cap, and a door heat insulator provided therein.

A gasket coming into close contact with the front surface of the main body and sealing the storage chamber at a time when the door is closed may be provided at the edge of the internal plate of the door. The door internal plate may include a dyke protruding rearward to mount a door bin that can store items. At this time, the door bin may be referred to as a door basket or a door bin.

According to one embodiment, the door may include a door body, and a front panel that is coupled onto the front side of the door body in a detachable manner and forming the front surface of the door. The door body may include a door external plate forming the front surface of the door body, a door internal plate forming the rear surface of the door body and facing the storage chamber, an upper cap, a lower cap and a door heat insulator provided therein.

The refrigerator may be categorized into a French door type, a side-by-side type, a bottom mounted freezer (BMF), a top mounted freezer (TMF) or a one door refrigerator and the like, based on disposition of the door and the storage chamber.

According to one embodiment, the refrigerator may include a cold air supply apparatus provided to supply cold air to the storage chamber.

The "cold air supply apparatus" may include a machine, a tool, an electronic apparatus and/or a system of a combination thereof that can generate cold air and guide the cold air to cool the storage chamber.

According to one embodiment, the cold air supply apparatus may generate cold air based on a freezing cycle including compression, condensation, expansion and evaporation processes of refrigerants. To this end, the cold air supply apparatus may include a freezing cycle apparatus having a compressor, a condenser, an expander, and an evaporator that can proceed with the freezing cycle. According to one embodiment, the cold air supply apparatus may include a semiconductor such as a thermoelectric element. The thermoelectric element may cool the storage chamber based on an exothermic reaction and a cooling action through the Peltier effect.

According to one embodiment, the refrigerator may include a machine room provided to allow at least partial components belong to the cold air supply apparatus to be disposed.

The "machine room" may be provided to be partitioned and thermally insulated from the storage chamber to prevent heat generated from the components disposed in the machine room from being transferred to the storage chamber. The inside of the machine room may be configured to communicate with the outside of the main body to thermally insulate the components disposed in the machine room.

According to one embodiment, the refrigerator may include a dispenser provided to the door to supply water and/or ice. The dispenser may be provided to the door such that a user is accessible without opening the door.

According to one embodiment, the refrigerator may include an ice making apparatus provided to generate ice. The ice making apparatus may include an ice making tray reserving water, an ice removing apparatus separating ice from the ice making tray, and an ice bucket storing ice generated in the ice making tray.

According to one embodiment, the refrigerator may include a controller for controlling the refrigerator.

The "controller" may include memory storing or memorizing programs and/or data for controlling the refrigerator, and a processor outputting a control signal for controlling the cold air supply apparatus and the like based on the programs and/or data memorized in the memory.

The memory stores or records various types of information, data, instructions, programs and the like required for operations of the refrigerator. The memory may memorize temporary data that is generated while the control signal for controlling the elements included in the refrigerator is generated. The memory may include at least one of volatile memory or non-volatile memory or a combination thereof.

The processor controls entire operations of the refrigerator. The processor may control the elements of the refrigerator, by executing the programs stored in the memory. The processor may include a separate NPU performing operations of an artificial intelligence model. Additionally, the processor may include a central processing unit, a graphics processing unit (GPU) and the like. The processor may generate a control signal for controlling operations of the cold air supply apparatus. For example, the processor may receive temperature information of the storage chamber from a temperature sensor, and based on the temperature information of the storage chamber, generate a cooling control signal for controlling operations of the cold air supply apparatus.

Additionally, the processor may process a user input of a user interface based on the programs and/or data memorized/stored in the memory, and control operations of the user interface. The user interface may be provided by using an input interface and an output interface. The processor may receive a user input from the user interface. Additionally, the processor may transfer a display control signal for displaying an image on the user interface and image data to the user interface in response to the user input.

The processor and the memory may be provided in an integrated manner or a separate manner. The processor may include one or more processors. For example, the processor may include a main processor and at least one sub processor. The memory may include one or more memories.

According to one embodiment, the refrigerator may include a processor and memory controlling all the elements included in the refrigerator, and may include a plurality of processors and a plurality of memories controlling the elements of the refrigerator individually. For example, the refrigerator may include a processor and memory controlling the operations of the cold air supply apparatus based on an output of the temperature sensor. Additionally, the refrigerator may be provided with a processor and memory controlling the operations of the user interface based on a user input, in a separate manner.

A communication module may communicate with an external apparatus such as a server, a mobile device, another home appliance and the like through a peripheral access point (AP). The AP may connect, to a wide region network (WAN) to which a server is connected, a local region network (LAN) to which a refrigerator or a user device is connected. The refrigerator or the user device may be connected to the server through the WAN.

The input interface may include a key, a touch screen, a microphone and the like. The input interface may receive a user input and transfer the user input to the processor.

The output interface may include a display, a speaker and the like. The output interface may output various types of notifications, messages, information and the like generated in the processor.

Meanwhile, in the disclosure, the "providing" of information by the refrigerator 100 may include transmitting information to a user terminal communicably connected with the refrigerator 100 and displaying the information through a display of the user terminal as well as displaying information through a display 123 included in the refrigerator 100.

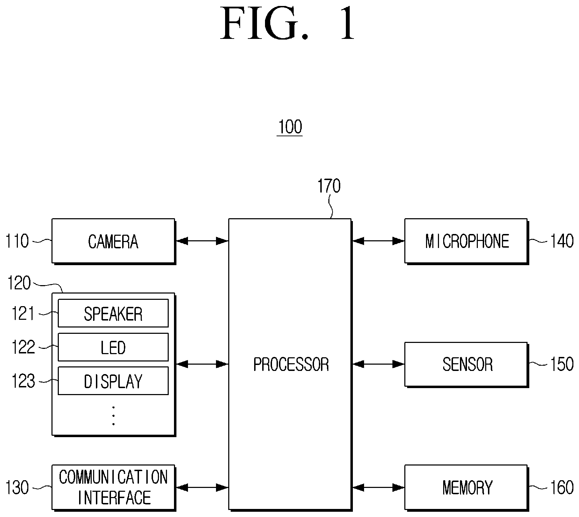

Hereinafter, a refrigerator according to embodiments is described in detail with reference to the accompanying drawings. FIG. 1 is a block diagram illustrating a configuration of a refrigerator according to one embodiment. As illustrated in FIG. 1, a refrigerator 100 may include a camera 110, an output unit 120, a communication interface 130, a microphone 140, a sensor 150, memory 160 and a processor 170. The refrigerator 100 may be an apparatus for storing foods or medicines at a preset temperature to keep the foods or the medicines cold or prevent the foods or the medicines from decaying. The refrigerator 100 according to one embodiment is illustrated in the form of an ordinary home refrigerator, but not limited thereto, and may be a kimchi refrigerator, a wine cooler, a cosmetic refrigerator, a freezer and the like.

The camera 110 is an element for photographing a subject and generating a photographed image, and herein, the photographed image may include both of a moving image and a still image. Meanwhile, an "image" of the disclosure may include both of an image output on the display 123 and an image frame photographed by the camera 110. Additionally, in a photographed image, at least one object may be included. As an element included in an image photographed through the camera, an "object" according to one embodiment may include a food object, a hand object, a face object, a kitchen tool object, and the like.

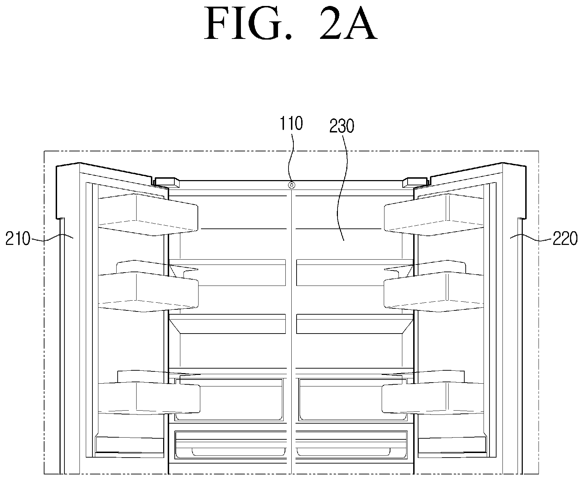

In particular, the camera 110 may photograph regions of the storage chamber in the main body 230 and the door bin (or a door basket, a pantry) of the door 210, 220. The camera 110 may be provided in at least one of the upper end region, the lower end region, the side surface region in the main body 230 to photograph the regions of the inside of the main body 230 and the door bin of the door 210, 220. Additionally, the camera 110 may be provided outside the refrigerator 100 to photograph the outside of the refrigerator 100. In other words, the camera 110 may certainly be implemented not only as one camera but also as a plurality of cameras depending on embodiments. More detailed descriptions in relation to this are provided with reference to FIGS. 2A-2F.

FIG. 2A is a view illustrating a refrigerator with a door open, according to one embodiment. In FIG. 2A, the refrigerator 100 is provided with a plurality of doors 210, 220, on both sides of the upper portion of the refrigerator 100, but not limited thereto, and the refrigerator 100 may be implemented as a French door type, a side-by-side type and the like depending on disposition of the door 210, 220, the storage chamber 230 and the like.

The refrigerator 100 may be provided with a door 210, 220, on both sides of the upper portion thereof. The refrigerator 100 may further include a storage chamber 230, as illustrated in FIG. 2A. The storage chamber 230 may be opened by the door 210, 220 that is opened and closed, to accommodate water, beverages, foods to be refrigerated or foods to be frozen. At this time, the storage chamber 230 may include a plurality of accommodation spaces or storage spaces. The storage chamber 230 may be partitioned by partitions disposed in the main body. The storage chamber may be divided into a freezer compartment disposed in the lower portion of the refrigerator 100, and a refrigerator compartment disposed in the upper portion of the refrigerator 100. However, the disposition of the freezer compartment and the refrigerator compartment is limited thereto, and the freezer compartment and the refrigerator compartment may be disposed in the way of exchanging locations with each other.

The door 210, 220 may be rotated by a hinge at a set angle (e.g., 300° or less) to open and close part of the front of the storage chamber 230.

At this time, a second door 220 out of a plurality of doors 210, 220 may include, on the surface thereof, a display 123 that displays functions and settings of the refrigerator 100 and is changeable based on a user input (e.g., a touch or a selection of a button). In addition, at least a partial door out of the plurality of doors 210, 220 may further include a dispenser providing water, ice or sparkling water and/or a grippable handle and the like.

Meanwhile, as illustrated in FIG. 2A, the refrigerator 100 may include a camera 110 in the upper end region of the main body to photograph at least part of the storage chamber 230 and door bin of the door 210, 220.

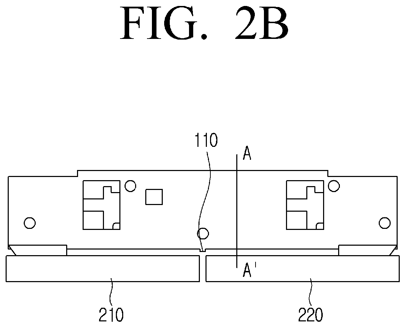

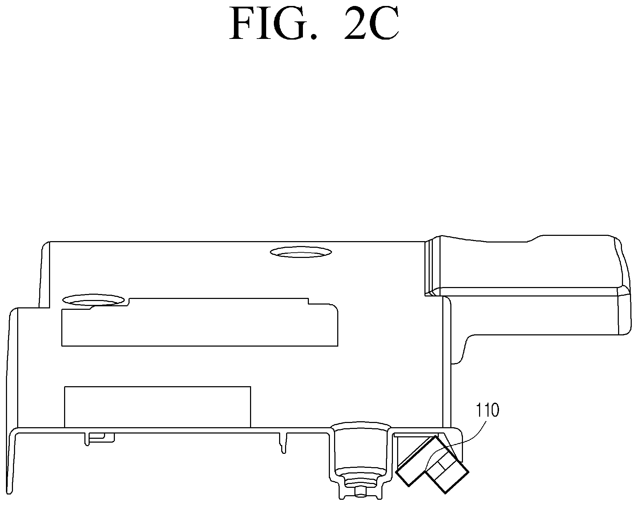

FIG. 2B is an upward perspective view of the refrigerator 100, and the camera 110, as illustrated in FIG. 2B, may be disposed in a central region of the upper end of the main body (in particular, a top table) to photograph all the door bins of a first door 210 and the second door 220 as illustrated in FIG. 2B. FIG. 2C is a cross-section view of FIG. 2B across A-A', and the camera 110, as illustrated in FIG. 2C, may be disposed to face a downward direction by a preset angle (e.g., 30 degrees) to photograph at least part of the storage chamber 230 and the door bin of the door 210, 220.

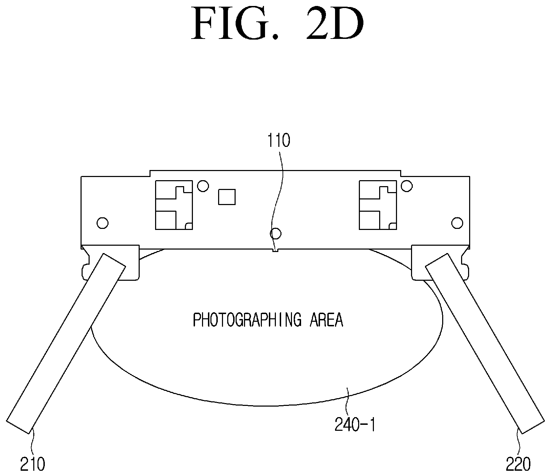

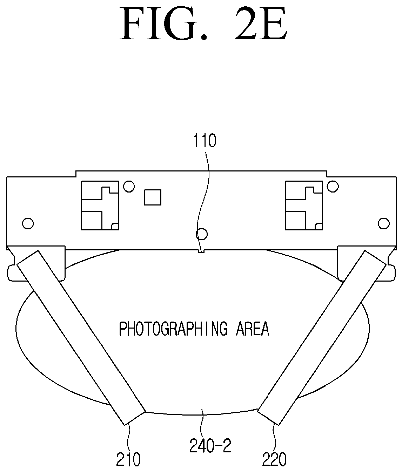

FIGS. 2D and 2E are upward perspective views of the refrigerator 100, and illustrate a photographing range 240-1, 240-2 in which the camera 110 performs photographing. FIG. 2D is a view illustrating a photographing range 240-1 in which the camera 110 performs photographing, with the door 210, 220 of the refrigerator 100 completely open, and FIG. 2E is a view illustrating a photographing range 240-2 in which the camera 110 performs photographing in the state where the door 210, 220 of the refrigerator 100 satisfies preset conditions. At this time, the "preset conditions" are conditions for obtaining an optimal door bin image, and the "optimal door bin image" may be an image satisfying optimal conditions for identifying information on foods included in the door bin.

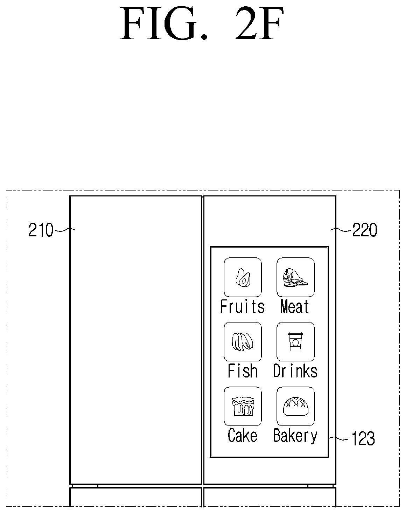

Additionally, as illustrated in FIG. 2F, the refrigerator 100 may include a display 123 on one or more doors out of the doors 210, 220 on both sides of the upper portion of the refrigerator 100. At this time, various types of information (e.g., event information, alarm information, recipe information, and the like received from the outside) as well as information on foods stored in the refrigerator 100 may be provided on the display 123. At this time, the display 123 may be implemented as a touch screen.

Additionally, the camera 110 may provide a photographed image to the processor 170 to manage a stock/removal of foods.

Further, the camera 110 may be implemented as a wide angle camera to photograph a wide angle of view, but not limited thereto.

Meanwhile, in FIGS. 2A-2E, the camera 110 is described as being located at the upper end of the inside of the main body, but this is described merely as one example, and a plurality of cameras may certainly be provided in another region (e.g., a rear surface region, a lower end region, a side surface region and the like) of the inside of the main body.

The output unit 120 may provide various types of feedbacks. In particular, the output unit 120, as illustrated in FIG. 1, may be provided with a speaker 121, a light emitting diode (LED) 122, a display 123 and the like, but this is described merely as one example, and may further include another output unit (e.g., a haptic supply apparatus and the like).

At this time, the speaker 121 may be provided inside or outside the refrigerator 100 and provide various acoustic feedbacks through an audio. The LED 122 may be provided in the storage chamber 230 in the refrigerator 100 or in the door 210, 220 and provide various visual feedbacks based on an indicator (e.g., an arrow and the like) of a specific shape, a flicker and the like. The display 123 may be located in at least a partial region out of the plurality of doors 210, 220 and provide various visual feedbacks to a user. In particular, the display 123 may display a food UI including information on stocked foods. At this time, the food UI as a UI visualizing the inside of the refrigerator 100 may be divided into a plurality of regions included in the refrigerator 100. At this time, the plurality of regions may include a plurality of door bin regions installed in the plurality of doors 210, 220 and a plurality of storage chamber regions in the storage chamber 230. Meanwhile, the food UI may be referred to as various terms such as a food list, food information and the like.

In particular, the output unit 120 may output information notifying that foods are stocked in/removed from the refrigerator, information on stocked/removed foods, a food UI and the like. Descriptions in relation to this are provided hereinafter with reference to the drawings.

The communication interface 130 may perform communication with an external server or an external terminal device. In particular, the communication interface 130 may transmit an image including a food to the external server, and receive information on a food from the external server, to obtain the information on a food. Additionally, the communication interface 130 may transmit information on a food, information on a storage location of a food and the like to a user terminal, and receive a control instruction from the user terminal. At this time, the communication interface 130 may communicate with the user terminal directly, but this is described merely as one example, and may certainly communicate with an external user terminal through a server.

In particular, the communication interface 130 may communicate with various types of external apparatuses by using various wireless communication technologies or mobile communication technologies. The wireless communication technologies, for example, may include Bluetooth, Bluetooth Low Energy, CAN communication, Wi-Fi, Wi-Fi Direct, ultrawide band (UWB), Zigbee, infrared Data Association (IrDA), or Near Field Communication (NFC), and the like, while the mobile communication technologies may include 3GPP, Wi-Max, Long Term Evolution (LTE), 5G and the like.

The microphone 140, as an element obtaining an audio signal and converting the audio signal into an electric signal, may be provided inside or outside the refrigerator 100. In particular, the microphone 140 may receive an audio signal including a user voice. At this time, the user voice may include information on stock or removal (hereinafter, referred to as a "stock/removal") and information on a food (e.g., the type of a food, an expiration date of a food and the like).

The sensor 150 may sense an operation state (e.g., power or temperature) of the refrigerator 100, or an external environment state (e.g., a user state), and generate an electric signal or a data value corresponding to the sensed state. In particular, the processor 170 may measure the temperature of the plurality of storage chambers of the refrigerator 100 respectively through a sensing value obtained through the sensor 150. Alternatively, the processor 170 may recognize a user as approaching through the sensor 150, and control the camera 110 to allow the camera 110 to be ready. Alternatively, the processor 170 may sense the door being opened through the sensor 150 and drive the camera 110.

The memory 160 may store an operating system (OS) for controlling entire operations of the elements of the refrigerator 100 and instructions or data relating to the elements of the refrigerator 100. In particular, the memory 160 may store various elements for managing a stock/removal of a food. Additionally, the memory 160 may store a food database (DB) in which information (e.g., the type of a food, the amount of a food, the expiration date of a food, the storage location of a food and the like) on a food stored in the refrigerator 100 is stored.

Further, the memory 160 according to one embodiment may store a trained neural network model (e.g., an object classification model and the like) for obtaining feature information corresponding to a food stocked in or removed from the refrigerator 100. Alternatively, the memory 160 may store a trained neural network model (e.g., an object recognition model and the like) for recognizing a food stocked in or removed from the refrigerator 100. Alternatively, the memory 160 may store a trained neural network model (e.g., an object restoration model and the like) for restoring a food stocked in the refrigerator 100. Alternatively, the memory 160 may store a trained neural network model (e.g., an image generation model and the like) for generating a food image corresponding to a food stocked in the refrigerator 100.

Alternatively, the memory 160 may store a background image in which an actual inside of the refrigerator 100 is photographed. Alternatively, the memory 160 may store a trained neural network model (e.g., a refrigerator image generation model and the like) for generating a background region in the refrigerator 100. Meanwhile, the memory 160 may be implemented as non-volatile memory (e.g., hard disk, solid state drive, flash memory), volatile memory (including memory in the processor 170), and the like.

The processor 170 may control the refrigerator 100 according to at least one instruction stored in the memory 160.

In particular, the processor 170 may include one or more processors. In detail, the one or more processors may include one or more among a central processing unit (CPU), a graphics processing unit (GPU), an accelerated processing unit (APU), a many integrated core (MIC), a digital signal processor (DSP), a neural processing unit (NPU), a hardware accelerator or a machine learning accelerator. The one or more processors may control one among the other elements of an electronic apparatus or any combination thereof, and perform an operation relating to communication or perform data processing. The one or more processors may execute one or more programs or instructions stored in the memory. For example, the one or more processors may perform a method according to one embodiment of the disclosure, by executing one or more instructions stored in the memory.

In the case where the method according to one embodiment includes a plurality of operations, the plurality of operations may be performed by one processor or a plurality of processors. In other words, in the case where a first operation, a second operation, and a third operation are performed based on the method according to one embodiment, the first operation, the second operation and the third operation may all be performed by a first processor, or the first operation and the second operation may be performed by the first processor (e.g., a generic-purpose processor), while the third operation may be performed by a second processor (e.g., an AI-exclusive processor). For example, an operation for managing a stock/removal of a food may be performed through a generic-purpose processor such as a CPU and the like, while an operation of obtaining feature information corresponding to a food object or an operation for recognizing a food by using a neural network model may be performed by an AI-exclusive processor such as an NPU and the like.

The one or more processors may be implemented as a single core processor including one core, or one or more multicore processors including multiple cores (e.g., homogeneous multi cores or heterogeneous multi cores). In the case where the one or more processors are implemented as a multicore processor, each of the multiple cores included in the multicore processor may include processor internal memory such as cache memory, and on-chip memory, and common cache shared by the multiple cores may be included in the multicore processor. Additionally, each of the multiple cores (or part of the multiple cores) included in the multicore processor may read and perform a program instruction for implementing the method according to one embodiment in an independent way, or in the way that all (or part) of the multiple cores are linked.

In the case where the method according to one embodiment includes a plurality of operations, the plurality of operations may be performed by one core among the multiple cores included in the multicore processor, or by the multiple cores included in the multicore processor. For example, in the case where a first operation, a second operation, and a third operation are performed based on the method according to one embodiment, the first operation, the second operation and the third operation may all be performed by a first core included in the multicore processor, or the first operation and the second operation may be performed by the first core included in the multicore processor, while the third operation may be performed by a second core included in the multicore processor.

In the embodiments of the disclosure, the processor may mean a system on a chip (SoC) where one or more processors and other electronic components are integrated, a single core processor, a multicore processor, or a core included in a single core processor or a multicore processor, and herein, the core may be implemented as a CPU, a GPU, an APU, an MIC, a DSP, an NPU, a hardware accelerator, or a machine learning accelerator and the like, but the embodiment thereof may not be limited thereto.

According to one embodiment, in the case where a trigger signal is sensed, the processor 170 may photograph at least part of the inside of the main body and the door through the camera 110 to obtain an image. The processor 170 may detect a food object included in the obtained image. Based on the food object being identified as stocked, the processor 170 identifies a stocking region of the food object based on the image. The processor 170 may crop a region corresponding to the food object in the image to obtain a cropped image. The processor 170 obtains a food image corresponding to the food object based on information of the stocking region of the food object and the cropped image. The processor 170 may add the obtained food image on a food UI visualizing the inside of the refrigerator based on the stocking region of the food object.

As one embodiment, the main body and the door may be divided into a plurality of regions, and the stocking region of the food object may correspond to one among the plurality of regions. The processor 170 may add the food image on the stocking region of the food object among a plurality of regions included in the food UI.

As one embodiment, the processor 170 may identify a left-right movement direction of a first food object based on information on a user's arm angle, a user's arm motion, a user's gaze, and a motion vector obtained from the image. Based on size information of the first food object obtained from the image, the processor 170 may identify an upward-downward movement direction of the food object. The processor 170 may identify the stocking region of the food object based on the left-right movement direction and upward-downward movement direction of the first food object.

As one embodiment, the processor 170 may mask a region excluding an existing food image located in the stocking region of the food object among the plurality of regions included in the food UI. The processor 170 may input an image of the masked stocking region and the cropped image to a trained neural network model to obtain a food image corresponding to the food object. The processor 170 may dispose the food image corresponding to the food object on the image of the masked stocking region not to overlap with the existing food image.

As one embodiment, in the case where a food object is hidden by a user hand object or another food object, the processor 170 may crop the food object hidden by the hand object to obtain a cropped image. The processor 170 may input the obtained cropped image to a trained neural network model to obtain a restored image in which a portion hidden by the hand object is restored. The processor 170 may obtain a food image corresponding to the first food object based on the information on the stocking region of the first food object and the restored image.

As one embodiment, in the case where there is a plurality of food objects, the processor 170 may crop each of the plurality of food objects to obtain a plurality of cropped images. The processor 170 may input each of the plurality of cropped images to a trained neural network model to obtain a plurality of restored images in which a portion hidden by a hand object is restored.

As one embodiment, the processor 170 may input the plurality of restored images to a trained neural network model to identify the types of foods included in the plurality of restored images.

As one embodiment, the processor 170 may generate a first layer corresponding to a food image. The processor 170 may control the display 123 to display the first layer and at least one second layer corresponding to a previously-stocked food image on the stocking region of the food object in an overlapped manner, in a food UI.

As one embodiment, the processor 170 may control the display 123 to display the first layer and the at least one second layer in the way that the display order of the first layer and the at least one second layer is changed based on a user touch.

As one embodiment, food density displayed on the plurality of regions included in the food UI may be adjustable based on user settings.

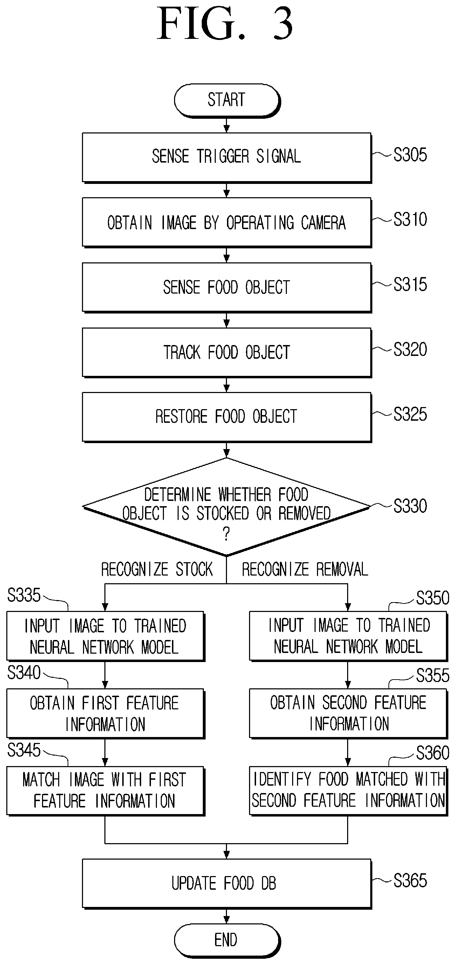

FIG. 3 is a flowchart provided to explain a method for managing stock and removal of a food, according to one embodiment.

A refrigerator 100 may sense a trigger signal (S305). At this time, the trigger signal, as a signal for driving a camera 110, may be a trigger signal generated after the opening of a door is sensed by a door opening/closing sensor, a trigger signal generated after the approach of a user is sensed by a proximity sensor, a trigger signal generated after a user voice for driving the camera is input through a microphone 140, for example. However, the trigger signal is described merely as one example, and the trigger signal may certainly be generated in another way.

The refrigerator 100 may drive the camera 110 and obtain an image (S310). Driving the camera 110, as an operation of initiating an operation of the camera 110 to obtain an image, may be expressed as activating the camera 110 or initiating the camera 100. At this time, the refrigerator 100 may obtain the image based on an initial setting value (exposure time, frames per second (FPS), gain and the like) of the camera. Additionally, the refrigerator 100 may set a Region of Interest (ROI) region in the image. The ROI region may be a region where the input or output of a user's hand or the stock or removal of a food is seen.

Additionally, in the case where the camera 110 is located inside, a predetermined light and a predetermined environment may be maintained based on lighting in the refrigerator 100, but in the case where the camera 110 is located outside, a photographing environment may be changed based on an external environment (e.g., external lighting and the like). Accordingly, the refrigerator 100 may dynamically change a setting value of the camera 110 based on an external environment (e.g., a lighting direction, illuminance and the like).

The refrigerator 100 may sense a food object (S315). At this time, the sensed food object may be a moving food object (e.g., a food object gripped in a user's hand, a food object contained in tableware such a pot, a food object hidden by another food object and the like). In detail, the refrigerator 100 may use a trained neural network model to recognize a user motion. At this time, the trained neural network model, as a motion recognition model trained to recognize a user's hand motion, may learn a user's hand motion based on images photographed in various external environments. The refrigerator 100 may recognize a user's hand motion and sense a moving food object and a moving hand object.

According to one embodiment, the refrigerator 100 may crop a region including the sensed food object from the photographed image and obtain a cropped image. The refrigerator 100 may input a region including a first food object to a first trained neural network model and obtain first feature information corresponding to the first food object. Alternatively, the refrigerator 100 may input the region including the first food object to a second trained neural network model and obtain information on the first food object.

Additionally, the refrigerator 100 may sense a pantry object, a face object, a kitchenware object and the like in addition to a hand object and a food object.

The refrigerator 100 may track a food object (S320). In detail, the refrigerator 100 may sense and track a food object in each image frame obtained by the camera 110. At this time, the refrigerator 100 may analyze a movement direction of a food object (or a hand object).

Meanwhile, the refrigerator 100 may input a photographed image (in particular, a cropped image) to a trained neural network model (e.g., an object recognition model) while sensing and tracking the food object and obtain information on the food object. At this time, the information on the food object may include at least one among the type of a food object, the brand name of the food object, the manufacture of the first food object, the amount of the first food object, but not be limited thereto.

The refrigerator 100 may restore a food object (S325). In detail, a food object included in an image photographed by the camera 110 may be hidden by a user's hand or another food object. The refrigerator 100 may restore the food object hidden by the user's hand or another food object. At this time, "restoring" may mean identifying a hidden region of a food object and filling the hidden region with a surrounding region of the hidden region. According to one embodiment, the refrigerator 100 may use a trained neural network model (e.g., an object restoration model) to restore the food object hidden by the user's hand and or another food object.

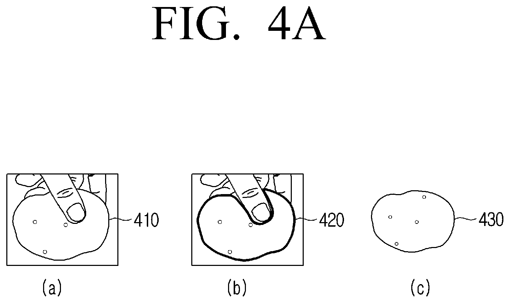

At this time, to restore the food object, the refrigerator 100 may separate the food object from the photographed image, mask a region excluding the food object, input the separated food object to a trained neural network model, and obtain a restored food object. As one embodiment, the refrigerator 100, as illustrated in (a) of FIG. 4A, may obtain an image 410. At this time, the image 410 may be a photographed image, but this is described merely as one example, and the image 410 may be a cropped image of a region corresponding to a food object included in a photographed image. The refrigerator 100, as illustrated in (b) of FIG. 4A, may separate a food object 420, and mask a region excluding the food object 420. Additionally, the refrigerator 100 may input the food object 420 to a trained neural network model and obtain a restored food object 430, as illustrated in (c) of FIG. 4A.

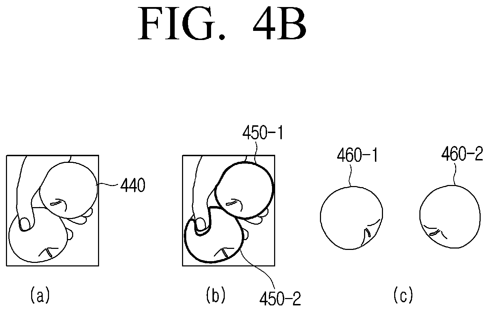

Additionally, the refrigerator 100 may restore each of a plurality of objects included in an image. As one embodiment, the refrigerator 100, as illustrated in (a) of FIG. 4B, may obtain an image 440. At this time, the image 440 may include a plurality of food objects of the same type. The refrigerator 100, as illustrated in (b) of FIG. 4B, first and second food objects 450-1, 450-2 respectively from the image, and mask a region excluding the first and second food objects 450-1, 450-2. Further, the refrigerator 100 may input the first and second food objects 450-1, 450-2 to a trained neural network model and obtain restored first and second food objects 460-1, 460-2 as illustrated in (c) of FIG. 4B. By doing so, food objects of the same type may be respectively restored from a photographed image such that the refrigerator 100 recognizes the number of stocked or removed food objects accurately.

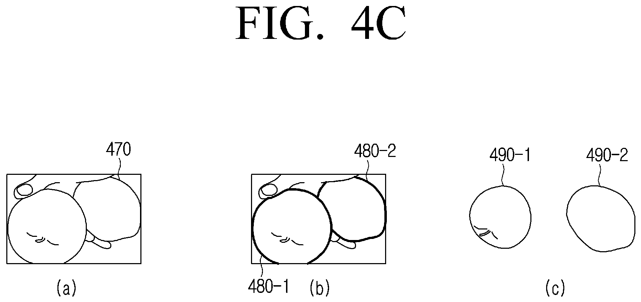

As another example, the refrigerator 100, as illustrated in (a) of FIG. 4C, may obtain an image 470. At this time, the image 470 may include a plurality of food objects of a different type. The refrigerator 100, as illustrated in (b) of FIG. 4C, may separate first and second food objects 480-1,480-2 respectively from the image, and mask a region excluding the first and second food objects 480-1,480-2. Additionally, the refrigerator 100 may input the first and second food objects 480-1, 480-2 to a trained neural network model, and obtain restored first and second food objects 490-1, 490-2, as illustrated in (c) of FIG. 4B. By doing so, food objects of a different type may be restored respectively from a photographed image, and an image including a plurality of restored food objects is input to an object recognition model, such that the refrigerator 100 recognizes the type and number of stocked or removed food objects accurately.

In particular, a trained neural network model (e.g., an object restoration model), as described above, may be used to restore a food object, and feature information may be obtained by using the restored food object, to obtain more accurate feature information, and the restored food object may be used to obtain a food image to be used for a food UI, to enhance user experience.

Meanwhile, in the above-described embodiment, an image including one object is input to an object restoration model to restore the one object, but this is described merely as one example, and the object restoration model may certainly be trained to restore a plurality of objects at the same time based on an input of an image including the plurality of objects.

The refrigerator 100 may determine whether a food object is stocked or removed (S330). As one embodiment, the refrigerator 100 may analyze a hand and a food object included in a plurality of image frames and determine stock or removal. As one embodiment, the refrigerator 100 may determine, based on a movement direction of the food object included in the plurality of image frames, stock or removal of the food object. In other words, based on the food object included in the plurality of image frames being identified as moved in a direction of the inside of the main body or the door bin, the refrigerator 100 may determine that the food object is stocked. Alternatively, based on the food object included in the plurality of image frames being identified as moved in a direction of the outside of the refrigerator 100, the refrigerator 100 may determine that the food object is removed.

Based on the food object being identified as stocked, the refrigerator 100 may input an image to a trained neural network model (S335). At this time, the neural network model may be a neural network model (e.g., an object classification model) trained to obtain feature information corresponding to a food object based on an input of an image. At this time, the neural network model may be trained based on the contrastive learning method. The contrastive learning method, as a main learning method for self-supervised learning, involves placing feature information (or a feature value) corresponding to a similar image in a vector space to be close to each other, and placing feature information corresponding to a different image to be far from each other. Additionally, the neural network model may segment a label unit and apply the label unit to training, and at this time, a label input by a user may be applied to training of a neural network model.

The refrigerator 100 may obtain first feature information from a neural network model (S340). At this time, the first feature information may include a feature value corresponding to a food object. At this time, the first feature information may be used to identify a food to be removed later.

The refrigerator 100 may match an image and first feature information (S345). In other words, the refrigerator 100 may match and store the image (in particular, a region corresponding to a food object) and the first feature information. In addition, the refrigerator 100 may match and store information on a food object obtained by a neural network model (an object recognition model) together with an image and first feature information. For example, the refrigerator 100 may store information on a food object such as "the name of a food, a storage location of a food, a stock date, a removal date of a food, the type of a food, barcode information of a food, a text included in a food" and the like together with an image and first feature information. At this time, the image matched with the first feature information may be an image of a region corresponding to a food object, but this is described merely as one example, and in step 325, may include an image of a restored food object.

The refrigerator 100 may update a food DB (S365). In detail, the refrigerator 100 may match and store an image, first feature information and information on a food in the food DB. At this time, the refrigerator 100 may store the first feature information in a feature information list of the food DB. In particular, the refrigerator 100 may compare a similarity between first feature information freshly stored in the feature information list and another feature information, and based on a result of the comparison, arrange the first feature information and update the feature information list. Further, the feature information list may arrange the feature information considering user information such as a user pattern, stock/removal time and the like as well as feature information.

Based on a food object being identified as removed, the refrigerator 100 may input an image to a trained neural network model (S350). At this time, the neural network model is identical with the neural network model described above in step 335, and accordingly, descriptions in relation to this are omitted.

The refrigerator 100 may obtain second feature information from a first neural network model (S355). At this time, the second feature information may include a feature value corresponding to a food object. Additionally, the second feature information is described as information different from the first feature information to distinguish stock and removal, but the second feature information may be a value identical with a value of the first feature information (or, a value within a range in which a food of the same type is determined).

The refrigerator 100 may identify a food matched with the second feature information (S360). In detail, the refrigerator 100 may identify a food corresponding to feature information closest to the second feature information out of the feature information stored in the food DB stored in the refrigerator 100. Additionally, the refrigerator 100 may identify the food corresponding to the feature information closest to the second feature information as a food matched with the second feature information. In other words, since the feature information indicates a vector value in a vector space, the refrigerator 100 may calculate a distance between the second feature information and another feature information to obtain information on a similarity between the second feature information and another feature information.

Meanwhile, the refrigerator 100 may obtain N numbers of candidate feature information based on a similarity between second feature information and another feature information, as well as obtaining a food matched with feature information closest to the second feature information, and obtain a candidate list including N numbers of candidate feature information. At this time, N may be preset, but this is described merely as one example, and N may be changed based on user settings. The refrigerator 100 may use the candidate list to receive, as an input, a user command selecting a removed food from the user.

The refrigerator 100 may update the food DB (S365). In detail, the refrigerator 100 may delete the food matched with the second feature information among foods stored in the food DB. Alternatively, the refrigerator 100 may change information on the food matched with the second feature information among the foods stored in the food DB. For example, the refrigerator 100 may change the number of a food stored in the food DB and the like.

The refrigerator 100 may use the food DB updated based on the above-described method, to provide a food UI (or a food list). At this time, the food UI, as a UI visualizing the inside of the refrigerator 100, may provide information on foods disposed in a plurality of regions of the inside of the refrigerator 100. For example, the food UI may distinguish information on foods stored in a plurality of regions of a left door bin, information on foods stored in a plurality of regions of a right door bin, information on foods stored in a region on the first floor in the main body, information on foods stored in a region on the second floor in the main body, information on foods stored in a region on the third floor in the main body and provide information to a user. Additionally, the food UI may include information on stocked foods, or information on removed foods. At this time, the information on the stocked or removed foods may include information on stock or removal time, stock or removal times and the like.

At this time, the food UI may include a food object and a background region of the inside of the refrigerator 100. At this time, the background region of the inside of the refrigerator 100 is a region where the inside of an actual refrigerator 100 is photographed, but this is described merely as one example, and the background region may be generated by a trained neural network model.

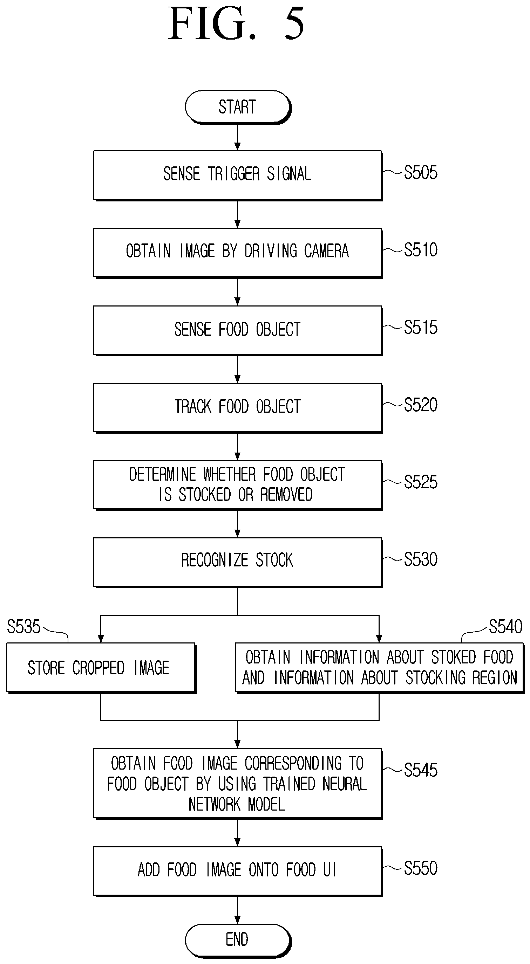

FIG. 5 is a flowchart provided to explain a method for adding a stocked food onto a food UI, according to one embodiment. Meanwhile, step 505, step 510, step 515, step 520, step 525 in FIG. 5 correspond to step 305, step 310, step 315, step 320, step 330 in FIG. 3, and accordingly, repetitive descriptions of the steps in FIG. 5 are omitted.

The refrigerator 100 may recognize stock of a food (S530). In detail, the refrigerator 100 may recognize stock of a food based on a movement direction of a food object. In other words, as the food object is moved from the outside of the refrigerator 100 to the inside of the refrigerator 100, the refrigerator 100 may recognize stock of a food.

Based on the stock into the refrigerator 100 being identified, the refrigerator 100 may store a cropped image (S535). In other words, the refrigerator 100 may store a cop image in which a region corresponding to the food object is cropped in a photographed image. Meanwhile, the cropped image may include a restored image obtained in step 325.

The refrigerator 100 may obtain information on a stocked food and information on a stocking region (S540). In detail, the refrigerator 100 may input a photographed image to a trained neural network model to obtain information on a stoked food. Additionally, the refrigerator 100 may analyze the photographed image and identify a movement direction of a food object to identify a stocking region of the food object.

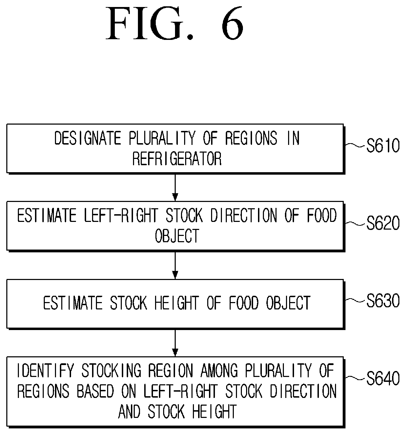

The method in which the refrigerator 100 analyzes a photographed image and identifies a movement direction of a food object to identify a stocking region of the food object is described with reference to FIGS. 6-10.

FIG. 6 is a flowchart provided to explain a method for identifying a stocking region of a food object, according to one embodiment.

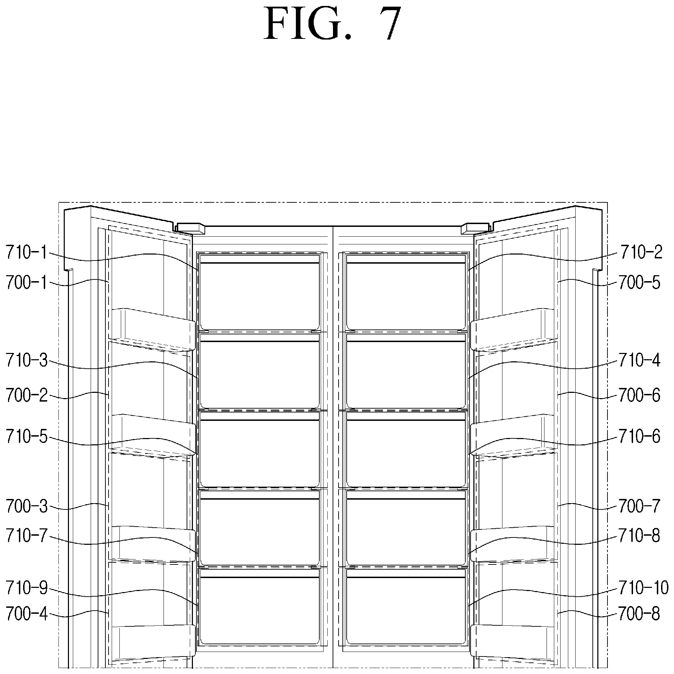

First, the refrigerator 100 may designate a plurality of regions in the refrigerator 100 (S610). At this time, the plurality of regions may include doors 210, 220 in the refrigerator and a plurality of regions included in a storage chamber 230. In particular, the refrigerator 100 may prestore a plurality of regions as an output value to be estimated as a stocking region of a food object. For example, the refrigerator 100, as illustrated in FIG. 7, may designate first-fourth door bin regions 700-1 to 700-4 at a left door 210, designate fifth-eighth door bin regions 700-5 to 700-8 at a right door 220, and designate first-tenth storage chamber regions 710-1 to 710-10 in the storage chamber 230.

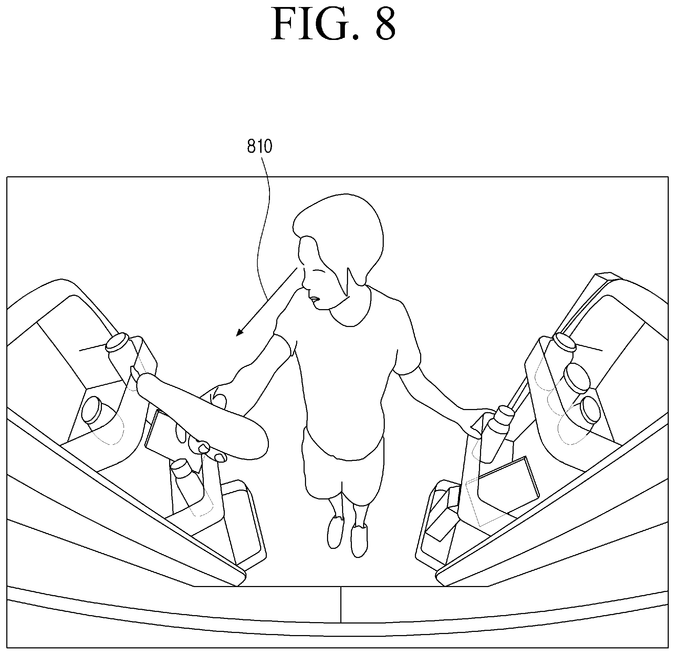

The refrigerator 100 may estimate a left-right stock direction of a food object (S620). In detail, the refrigerator 100 may identify a left-right movement direction of a stocked food object based on information on at least one among a user's arm angle, a user's arm motion, a user's gaze and a motion vector (e.g., an optical flow and the like) that are obtained from a photographed image. As one embodiment, the refrigerator 100 may determine, as one of directions, a direction toward a door bin of the left door 210 as a far-right direction, a direction toward a left region of the storage compartment 230 as a right direction, a direction toward a right region of the storage compartment 230 as a left direction, and a direction toward a door bin of the right door 210 as a far-left direction. For example, in the case where a user's gaze moves in a left direction 810, the refrigerator 100, as illustrated in FIG. 8, may estimate that a direction of stock of a food object is a right direction (i.e., a direction facing the left region of the storage chamber 230).

Meanwhile, in FIG. 8, a direction of a user's gaze is estimated based on one image, but this is described merely as one example, and a direction of a user's gaze may certainly be estimated based on a plurality of images (i.e., a moving image).

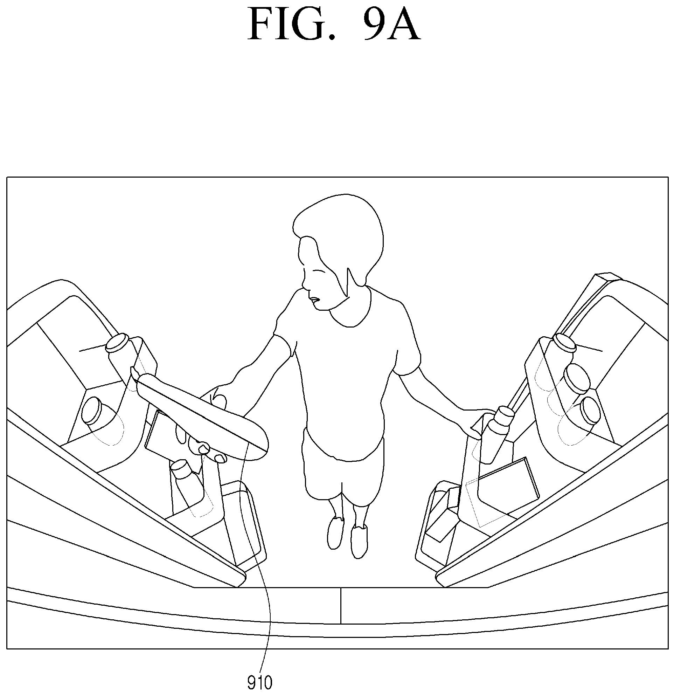

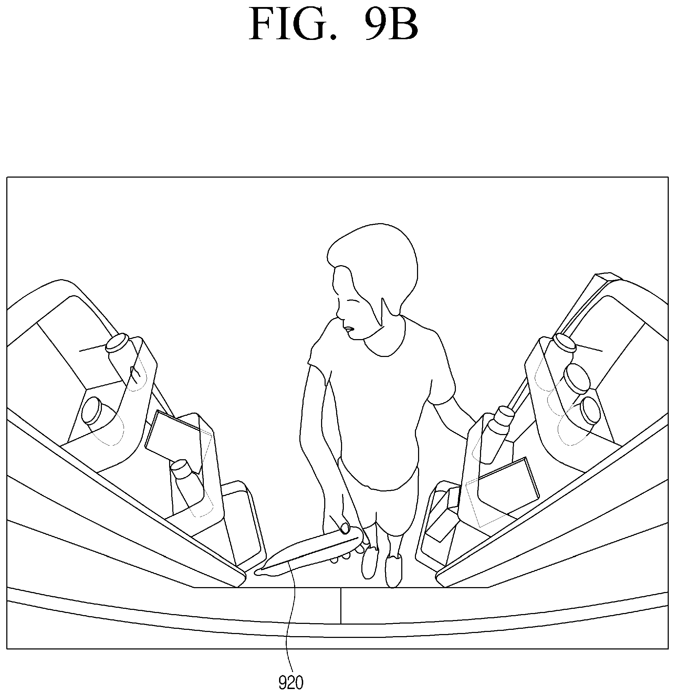

The refrigerator 100 may estimate a stock height of a food object (S630). In detail, the refrigerator 100 may identify a stock height (or an upward-downward movement direction) of a food object based on size information of the food object obtained from an image. For example, in the case where the size of a food object in a first image frame is a first size 910 as illustrated in FIG. 9A, while the size of the food object in a second image frame as a following image frame of the first image frame is a second size 920 less than the first size as illustrated in FIG. 9B, the refrigerator 100 may estimate that a direction of stock of the food object is a direction in which the food object becomes farther from the camera 110, i.e., a downward direction. At this time, the refrigerator 100 may estimate a stock height based on a ratio of the first size 910 and the second size 920. Alternatively, the refrigerator 100 may input a photographed image to a neural network model trained to estimate a stock height of a food object included in a photographed image, and estimate the height of the stock of the food object.

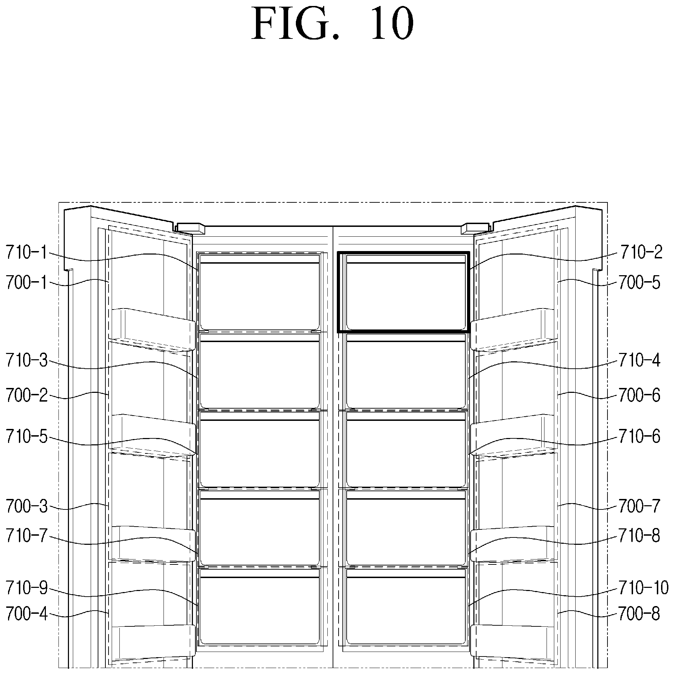

The refrigerator 100 may identify a stocking region among a plurality of regions based on a left-right stock direction and a stock height (S640). In other words, the refrigerator 100 may identify a stocking region among a plurality of regions based on a combination of a left-right stock direction of a food object and a stock height. For example, in the case where it is estimated that a left-right direction of stock of a food object is a left direction and that a height of the stock of the food object is an uppermost end, the refrigerator 100, as illustrated in FIG. 10, may identify that a second storage chamber region 710-2 is the stocking region of the food object.

Meanwhile, a refrigerator image illustrated in FIGS. 7 and 10 may be an image where the inside of an actual refrigerator 100 is photographed, but this is described merely as one example, and the refrigerator image may be a virtual refrigerator image generated by a neural network model. Additionally, the refrigerator 100 may dispose an image of a food object (an actual image or a restored image) on the image of the inside of the refrigerator 100 to provide a food UI.

As one embodiment, the refrigerator 100 may certainly identify a stocking region considering all of a motion vector, a user's arm angle and motion, a user's gaze, a size and a direction of an object and the like, to enhance accuracy of the stocking region. Referring back to FIG. 5, the refrigerator 100 may use a trained neural network model to obtain a food image corresponding to a food object (S550). At this time, the neural network model, as a neural network model trained to obtain a food image corresponding to a food object based on an input of information on a stocking region of the food object and a cropped image (or a restored image), may be referred to as an image generation model. At this time, the food image, as an image to be added onto a food UI, may be referred as various terms such as a food thumbnail, a food UI element and the like.

The refrigerator 100 may add a food image onto the food UI (S550). In detail, the refrigerator 100 may add the food image onto a region where existing food images are not disposed in the food UI. Additionally, the refrigerator 100 may store the food UI to which the food image is added in the memory 160. In the case where a preset event (e.g., an event where the door of the refrigerator 100 is closed after a food is stocked, or an event where a user input for displaying the food UI is received, and the like) occurs, the refrigerator 100 may provide the food UI to which the food image is added. By doing so, the refrigerator 100 may provide the food UI to which a stocked food is added to a user.

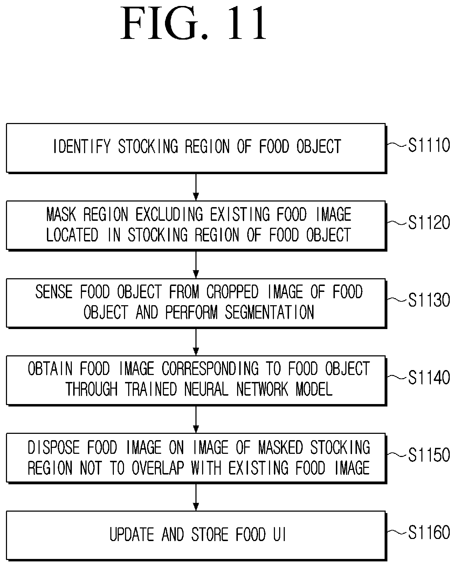

The method in which a food image is obtained and disposed on a food UI is described in greater detail with reference to FIGS. 11- 12F.

FIG. 11 is a flowchart provided to explain a method for generating a food image corresponding to a food object and adding the image onto a food UI, according to one embodiment.

The refrigerator 100 may identify a stocking region of a food object (S1110). In detail, the refrigerator 100 may identify a stocking region of a food object based on the same method as the method described in step 540.

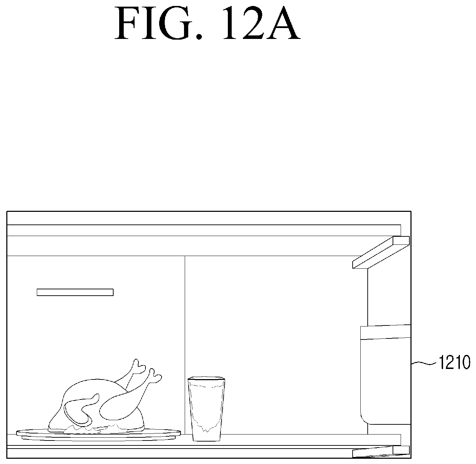

The refrigerator 100 may mask a region excluding an existing food image located in a stocking region of a food object (S1120). In detail, the refrigerator 100, as illustrated in FIG. 12A, may store an image corresponding to the stocking region of the food object. The image corresponding to the stocking region of the food object may include a background region of the region together with a food image corresponding to the food object stocked in the region. Meanwhile, the background region in which the food mage is located may be prestored, but this is described merely as one example, and the background are may be obtained through a trained neural network model. In other words, the refrigerator 100 may input information on the stocking region of the food object to the trained neural network model to obtain the background region in which the food image is disposed.

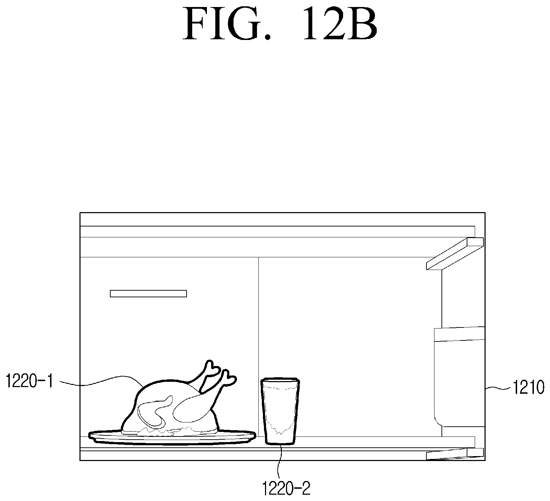

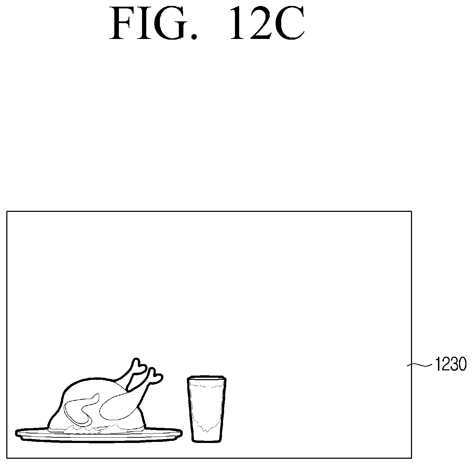

The refrigerator 100, as illustrated in FIG. 12B, may identify, from an image 1210 corresponding to a stocking region of a food object, regions 1220-1, 1220-2 corresponding to existing food images. The refrigerator 100, as illustrated in FIG. 12C, may mask a region (e.g., a background region) excluding the regions 1220-1, 1220-2 corresponding to the existing food images, and as illustrated in FIG. 12C, obtain a masked image 1230.

The refrigerator 100 may sense a food object from a cropped image of the food object to perform segmentation (S1130). In other words, the refrigerator 100 may obtain the cropped image based on a region corresponding to the food object from an image photographed at a time of stock. Additionally, the refrigerator 100 may sense the food object from the cropped image, perform segmentation and obtain the food object. As another example, the refrigerator 100 may sense a food object from a restored image obtained in step 325 of FIG. 3, perform segmentation and obtain the food object.

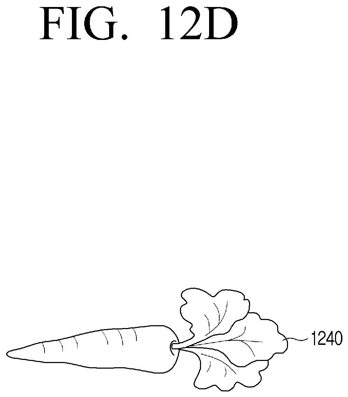

The refrigerator 100 may obtain a food image corresponding to a food object through a trained neural network model (S1140). In detail, the refrigerator 100 may input information on a stocking region (e.g., information on a masked region obtained in step 1120) and a food object which is obtained in step 1130 and in which segmentation is performed to a trained neural network model (i.e., an image generation model) to obtain a food image corresponding to a stocked food object. For example, the refrigerator 100 may input the information on the stocking region and the food object in which segmentation is performed to the trained neural network model to obtain a food image 1240 illustrated in FIG. 12D. Meanwhile, in the above embodiment, a segmented food object is input to a trained neural network model, but this is described merely as one example, and a cropped image or a restored image may certainly be input to a trained neural network model.

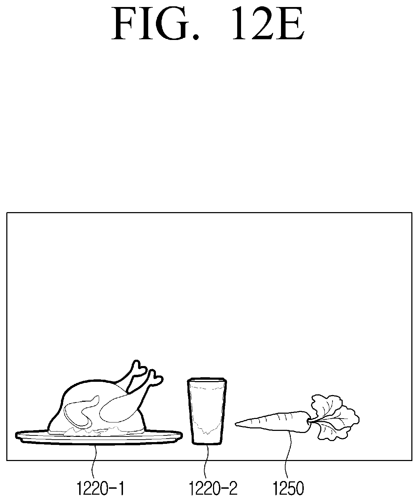

The refrigerator 100 may dispose a food image corresponding to a food object on an image of a masked stocking region not to overlap with an existing food image (S1150). For example, the refrigerator 100, as illustrated in FIG. 12E, may dispose a food image 1250 on an image of a masked stocking region such that the food image does not overlap with an existing food image 1220-1, 1220-2. At this time, the refrigerator 100 may obtain a background region of the refrigerator 100 for disposing a food object. As one embodiment, the refrigerator 100 may obtain a prestored background region of the refrigerator 100, but this is described merely as one example, and the refrigerator 100 may use a trained neural network model to obtain a background region of the refrigerator 100. In other words, the refrigerator 100 may input disposition information of a food object to the trained neural network model to obtain the background region of the refrigerator 100.

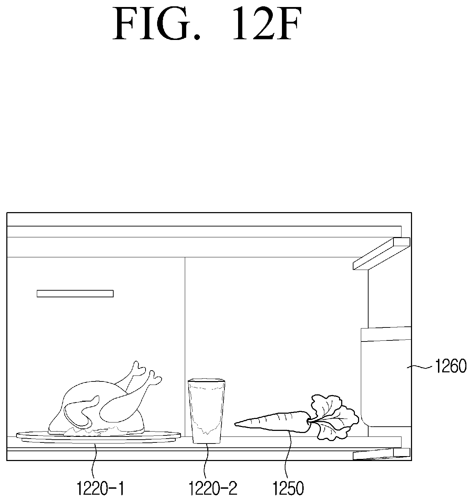

The refrigerator 100 may update and store a food UI (S1160). In detail, the refrigerator 100 may add a food image 1250 freshly in addition to existing food images 1220-1, 1220-2 to update an image corresponding to a stocking region of a food object. For example, the refrigerator 100, as illustrated in FIG. 12F, may add a background region together with the freshly added food image 1250 in addition to the existing food images 1220-1, 1220-2 to update an image corresponding to a stocking region of a food object. Additionally, the refrigerator 100 may update the food UI and store the same in the memory 150 based on the image corresponding to the stocking region of the food object.

As described above, an image corresponding to a stocking region of a food object is obtained to update a food UI, such that information (i.e., an image) on food objects currently disposed in a plurality of regions in the refrigerator 100 is provided without a camera for photographing the plurality of regions in the refrigerator 100.

Meanwhile, in the above embodiment, a food image is disposed not to overlap with an existing food image, but in the case where more and more foods are disposed, there may be a portion where food images overlap. To solve the problem, the refrigerator 100 according to one embodiment may generate a layer corresponding to a food image and add the food image to the food UI at a time of adding the food image.

In detail, the refrigerator 100 may generate, based on a food image of a stocked food, a first layer corresponding to the food image. Additionally, the refrigerator 100 may overlap the first layer and at least one second layer corresponding to a previously-stocked food image on a stocking region of a food object in the food UI.

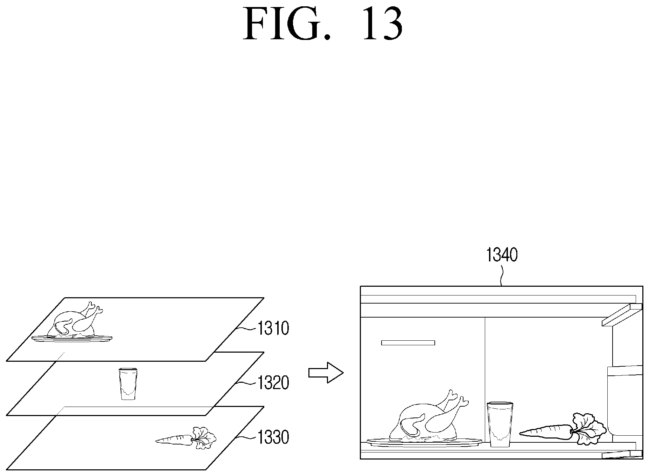

For example, the refrigerator 100 may generate a first layer 1310 corresponding to a first food image of stocked foods, and as illustrated on the left of FIG. 13, overlap the generated first layer and a plurality of second layers 1320, 1330 corresponding to existing food images, and as illustrated on the right of FIG. 13, provide a food UI (i.e., an image corresponding to a stocking region). At this time, the layers may be overlapped in a stock order of foods included in the food images, but this is described merely as one example, and the layers may be overlapped based on user preference on a food, consumption frequency of a food, the size of a food, the expiration date of a food and the like.

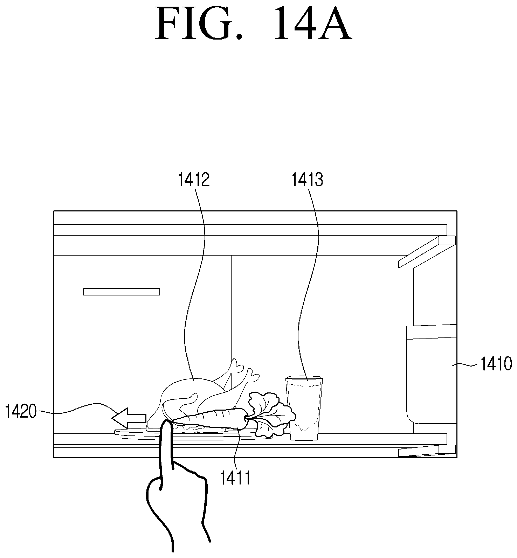

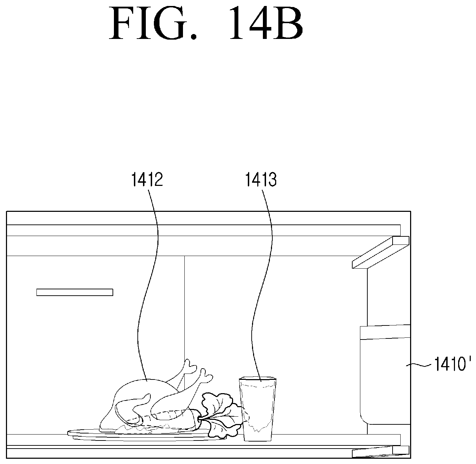

Further, the refrigerator 100 may change a display order of the first layer and the at least one second layer based on a user touch. For example, in detail, in the case where a latest stocked food image 1411 and an existing food image 1412 are displayed on a food UI 1410 in an overlapped manner as illustrated in FIG. 14A, the refrigerator 100 may change the display order of a first layer and at least one second layer based on a user touch. For example, in the case where a user touch 1420 of dragging in a first direction is input as illustrated in FIG. 14A, the refrigerator 100 may move a first layer displayed on at least one second layer rearward and provide a food UI 1410' including existing food images 1412, 1413 as illustrated in FIG. 14B. At this time, a latest stocked food image 1411 may be hidden by the existing food images 1412, 1413 as illustrated in FIG. 14B. Meanwhile, this is described merely as one example, and the latest stocked food image 1411 may be removed from the food UI 1410 based on a user touch.

As another example, the refrigerator 100 may change a display location of a food image displayed on the food UI based on a user touch. In other words, in the case where a user touch of touching for a preset period of time and then dragging is input, the refrigerator 100 may change the display location of the food image based on a drag direction of the user touch.

As described above, as the food UI is changed based on a user touch, the food UI including disposition of a food desired by a user may be provided. By doing so, the user may obtain information on foods disposed in the refrigerator 100 more accurately and readily.

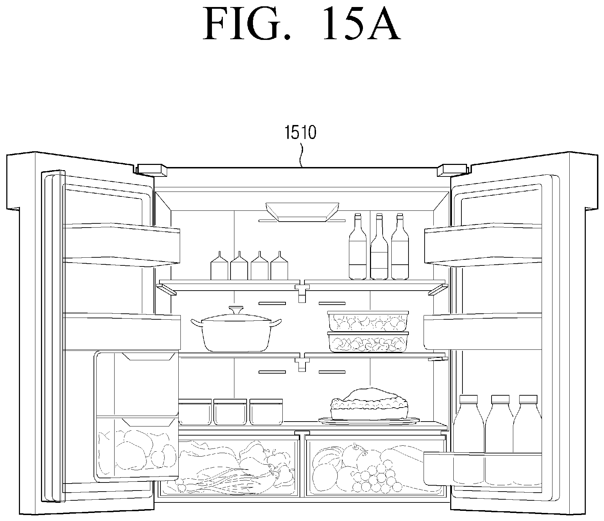

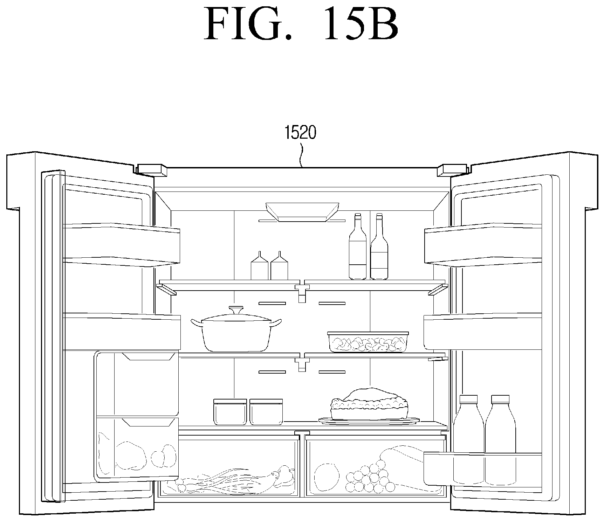

According to one embodiment, food density displayed on a plurality of regions included in the food UI may be adjustable based on user settings. For example, in the case where the food density is set to first density, the refrigerator 100, as illustrated in FIG. 15A, may provide a food UI 1510 based on the number and the disposition method of food images corresponding to the first density. In the case where the food density is set to second density, the refrigerator 100, as illustrated in FIG. 15B, may provide a food UI 1520 based on the number and disposition method of food images and corresponding to the second density. At this time, the first density may be greater than the second density, and the number of food images corresponding to the first density may be greater than or equal to the number of food images corresponding to the second density, while an overlap region between food images in the disposition method of food images corresponding to the first density may be greater than in the disposition method of food images corresponding to the second density. Density of a refrigerator (food) UI may be set for each of a plurality of regions included in the refrigerator (food) UI.

Meanwhile, according to one embodiment, a background region in which foods images are disposed may be changed as well as the number and disposition method of food images based on density. In other words, the refrigerator 100 may input information on density as well as information on a stocking region of a food object to a trained neural network model to obtain a background region in which a food image is disposed.

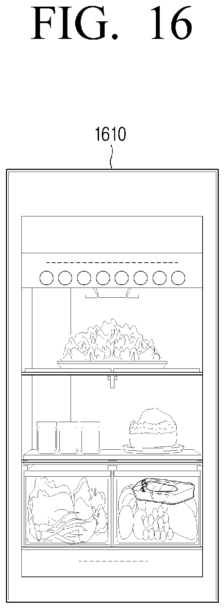

Additionally, the refrigerator 100, as illustrated in FIGS. 15A and 15B, may provide a food UI 1510, 1520 including information on an entire region of the refrigerator, but this is described merely as one example, and the refrigerator, as illustrated in FIG. 16, may provide a food UI 1610 including information on at least part of a plurality of regions in the refrigerator 100. At this time, the at least part of the plurality of regions provided on the food UI 1610 may be selected based on a user input. By doing so, a user may see a partial region the user wants to see, in the refrigerator 100, in greater detail.

Meanwhile, the order of the flowcharts according to the above-described embodiments is described merely as one example, the order of each step of the flowcharts may be changed and may certainly be performed at the same time.

Meanwhile, the processor 170 according to one embodiment may perform control to process input data, based on a predefined operation rule or an artificial intelligence model stored in the memory 160. The predefined operation rule or the artificial intelligence model is characterized in that the predefined operation rule or the artificial intelligence model is generated based on learning.

Herein, generating the predefined operation rule or the artificial intelligence model based on learning means generating a predefined operation rule or an artificial intelligence model of a desired feature, by applying a learning algorithm to large numbers of learning data. Such learning may be performed in an apparatus itself in which artificial intelligence according to the disclosure is performed, or performed through a separate server/system.

The artificial intelligence model (e.g., first and second object sensing networks) may be comprised of a plurality of neural network layers. At least one layer has at least one weight value, and a computation of the layer is performed through a result of a computation of a previous layer and at least one defined computation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), and a deep Q-network, and a transformer, but the neural network in the disclosure is not limited to the above examples, unless explicitly stated otherwise.

The learning algorithm is a method by which a predetermined target apparatus is trained by using a large number of learning data, enabling the predetermined target apparatus to make its own decision or prediction. Examples of the learning algorithm may include supervised learning, unsupervised learning, semi-supervised learning or reinforcement learning, but the learning algorithm in the disclosure is not limited to the above examples, unless explicitly stated otherwise.

Meanwhile, the method according to the embodiments set forth herein may be provided in a computer program product. The computer program product may be exchanged between a seller and a purchaser as a commodity. The computer program product may be distributed in the form of a machine-readable storage medium (e.g., compact disc read only memory (CD-ROM)), or distributed (e.g., downloaded or uploaded) online through an application store (e.g., Play Store^{™}) or directly between two user devices (e.g., smartphones). In the case of online distribution, at least part of the computer program product (e.g., a downloadable app) may be stored at least temporarily, or generated temporarily in a machine-readable storage medium such as a manufacturer's server, a server of an application store, or memory of a relay server.

The method according to the embodiments set forth herein may be implemented with software including instructions stored in a storage medium readable by a machine (e.g., a computer). The machine, as a device capable of calling the stored instructions from the storage medium and operating according to the called instructions, may include the electronic apparatus (e.g., a refrigerator) according to the embodiments set forth herein.

Meanwhile, a machine-readable storage medium may be provided in the form of a non-transitory storage medium. Herein, the "non-transitory storage medium" only means a tangible apparatus and means including no signal (e.g., electromagnetic waves) while the term does not distinguish semi-permanent or temporary storage of data in the storage medium. For example, the "non-transitory storage medium" may include a buffer where data are temporarily stored.

Based on the instructions being executed by a processor, the processor may perform functions corresponding to the instructions directly or by using other elements under the control of the processor. The instructions may include a code generated or executed by a compiler or an interpreter.

While example embodiments of the disclosure are illustrated and described above, embodiments of the disclosure are not limited to specific embodiments set forth herein, and certainly, various modifications thereof may be made by those skilled in the art, without departing from the matter of the disclosure, claimed in the section of claims, and should not be understood as separating from the technical spirit or prospect of the disclosure.

## Claims

1. A refrigerator comprising:
a display;
a main body including a storage chamber;
a door rotatably coupled to the main body to open and close the storage chamber, and configured to include a door bin;
a camera located at the main body, and configured to photograph an inside of the main body and an inside of the door;
memory configured to store at least one instruction; and
a processor,
wherein the processor photographs, based on a trigger signal being sensed, at least part of the inside of the main body and the door and obtains an image through the camera,
detects a food object included in the obtained image,
identifies, based on the food object being identified as stocked, a stocking region of the food object according to the image,
crops a region corresponding to the food object in the image and obtains a cropped image,
obtains, based on information on the stocking region of the food object and the cropped image, a food image corresponding to the food object, and
adds, based on the stocking region of the food object, the obtained food image on a food UI visualizing an inside of the refrigerator.

2. The refrigerator of claim 1,
wherein the main body and the door are divided into a plurality of regions,
wherein the stocking region of the food object corresponds to one among the plurality of regions, and
wherein the processor adds the food image onto a stocking region of the food object among a plurality of regions included in the food UI.

3. The refrigerator of claim 1,
wherein the processoridentifies, based on information on a user's arm angle, a user's arm motion, a user's gaze and a motion vector obtained from the image, a left-right movement direction of the first food object,
identifies, based on size information of a first food object obtained from the image, an upward-downward movement direction of the food object, and
identifies, based on the left-right movement direction and the upward-downward movement direction of the first food object, the stocking region of the food object.

4. The refrigerator of claim 1,
wherein the processormasks a region excluding an existing food image located in the stocking region of the food object among a plurality of regions included in the food UI,
inputs an image of the masked stocking region and the cropped image to a trained neural network model and obtains a food image corresponding to the food object, and
disposes the food image corresponding to the food object on the image of the masked stocking region not to overlap with the existing food image.

5. The refrigerator of claim 1,
wherein the processorcrops, based on the food object being hidden by a user's hand object or another food object, the food object hidden by the hand object and obtains a cropped image,
inputs the obtained cropped image to a trained neural network model and obtains a restored image in which a portion hidden by the hand object is restored, and
obtains, based on information on a stocking region of the first food object and the restored image, a food image corresponding to the first food object.

6. The refrigerator of claim 5,
wherein the processorcrops, based on the food object being present in a plurality of numbers, each of the plurality of food objects and obtains a plurality of cropped images, and
inputs each of the plurality of cropped images to a trained neural network model and obtains a plurality of restored images in which a portion hidden by a hand object is restored.

7. The refrigerator of claim 6,
wherein the processorinputs the plurality of restored images to a trained neural network model and identifies a type of a food included in the plurality of restored images.

8. The refrigerator of claim 1,
wherein the processorgenerates a first layer corresponding to the food image, and
controls the display to display the first layer and at least one second layer corresponding to a previously-stocked food image on the stocking region of the food object in an overlapped manner, in the food UI.

9. The refrigerator of claim 8,
wherein the processorcontrols, based on a user touch, the display to display the first layer and the at least one second layer in a way that a display order of the first layer and the at least one second layer is changed.

10. The refrigerator of claim 1,
wherein food density displayed on a plurality of regions included in the food UI is adjustable based on user settings.

11. A control method for a refrigerator including a main body including a storage chamber, a door rotatably coupled to the main body to open and close the storage chamber and configured to include a door bin, a camera located at the main body and configured to photograph an inside of the main body and an inside of the door, the method comprising:
photographing, based on a trigger signal being sensed, at least part of an inside of the main body and the door and obtaining an image through the camera;
detecting a food object included in the obtained image;
identifying, based on the food object being identified as stocked, a stocking region of the food object according to the image;
cropping a region corresponding to the food object in the image and obtaining a cropped image;
obtaining, based on information on the stocking region of the food object and the cropped image, a food image corresponding to the food object; and
adding, based on the stocking region of the food object, the obtained food image on a food UI visualizing an inside of the refrigerator.

12. The method of claim 11,
wherein the main body and the door are divided into a plurality of regions,
wherein the stocking region of the food object corresponds to one among the plurality of regions, and
wherein the adding includes adding the food image onto a stocking region of the food object among a plurality of regions included in the food UI.

13. The method of claim 11,
the identifying comprising:
identifying, based on information on a user's arm angle, a user's arm motion, a user's gaze and a motion vector obtained from the image, a left-right movement direction of the first food object;
identifying, based on size information of a first food object obtained from the image, an upward-downward movement direction of the food object; and
identifying, based on the left-right movement direction and the upward-downward movement direction of the first food object, the stocking region of the food object.

14. The method of claim 11,
the obtaining a food image comprising:
masking a region excluding an existing food image located in the stocking region of the food object among a plurality of regions included in the food UI; and
inputting an image of the masked stocking region and the cropped image to a trained neural network model and obtaining a food image corresponding to the food object,
the adding comprising:
disposing the food image corresponding to the food object on the image of the masked stocking region not to overlap with the existing food image.

15. The method of claim 11,
the obtaining a cropped image comprising:
cropping, based on the food object being hidden by a user's hand object or another food object, the food object hidden by the hand object and obtaining a cropped image; and
inputting the obtained cropped image to a trained neural network model and obtaining a restored image in which a portion hidden by the hand object is restored,
the obtaining a food image comprising:
obtaining, based on information on a stocking region of the first food object and the restored image, a food image corresponding to the first food object.
